(19) Europäisches Patentamt / European Patent Office / Office européen des brevets

(11) **EP 3 857 413 B1**

(12) **FASCICULE DE BREVET EUROPEEN**

(45) Date de publication et mention de la délivrance du brevet:
**07.05.2025 Bulletin 2025/19**

(21) Numéro de dépôt: **19772772.0**

(22) Date de dépôt: **25.09.2019**

(51) Classification Internationale des Brevets (IPC):
**G06F 21/31** (2013.01)   **H04L 9/32** (2006.01)
**H04L 9/00** (2022.01)

(52) Classification Coopérative des Brevets (CPC):
**G06F 21/31; H04L 9/32; H04L 9/50;**
G06F 2221/2101

(86) Numéro de dépôt international:
**PCT/EP2019/075953**

(87) Numéro de publication internationale:
**WO 2020/064890 (02.04.2020 Gazette 2020/14)**

(54) **PROCEDE DE TRAITEMENT D'UNE TRANSACTION, DISPOSITIF, SYSTEME ET PROGRAMME CORRESPONDANT**

VERFAHREN ZUR VERARBEITUNG EINER TRANSAKTION, VORRICHTUNG, SYSTEM UND ZUGEHÖRIGES PROGRAMM

METHOD FOR PROCESSING A TRANSACTION, DEVICE, SYSTEM AND CORRESPONDING PROGRAM

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **25.09.2018 FR 1858754**

(43) Date de publication de la demande:
**04.08.2021 Bulletin 2021/31**

(73) Titulaire: **Banks and Acquirers International Holding**
**75015 Paris (FR)**

(72) Inventeur: **QUENTIN, Pierre**
**95880 Enghien les Bains (FR)**

(74) Mandataire: **Germain Maureau**
**12, rue Boileau**
**69006 Lyon (FR)**

(56) Documents cités:
**WO-A1-2018/026727   US-A1- 2018 063 709**

## Description

### 1. Domaine

L'invention se rapporte au domaine de l'authentification d'utilisateurs. L'invention se rapporte plus particulièrement à l'authentification d'utilisateurs lors de transactions impliquant la mise en œuvre d'un dispositif d'utilisateur, également appelé terminal de communication. L'invention porte plus particulièrement sur l'authentification d'utilisateur au sein d'une base de données distribuée au sein d'un réseau de communication. Plus spécifiquement encore, un objet de la présente technique est d'augmenter le niveau de sécurité d'une transmission de données dans le cadre du traitement d'une transaction (telle qu'un paiement mobile) réalisé avec un terminal de communication portable (par exemple un smartphone ou une tablette).

### 2. Art Antérieur

D'une manière générale, le nombre de paiements en ligne est en constante augmentation. Les paiements mobiles représentent un type particulier des paiements en ligne et une part croissante de ceux-ci. Ils peuvent être effectués par le biais de fournisseurs de paiement, tels que Paypal™, ou en faisant appel à des organisations bancaires traditionnelles, en utilisant une carte bancaire de paiement.

Cependant, le paiement en ligne est marqué par un taux de fraude relativement élevé. En France, on estime qu'environ 5% des paiements en ligne effectués sur Internet sont frauduleux. Ces paiements frauduleux de cinq pour cent représentent environ trente-trois pour cent du coût total de la fraude. Il est donc nécessaire d'avoir des moyens d'une part d'identifier les tentatives de fraude et d'autre part de bloquer ces tentatives.

Un des problèmes dans les transactions par mobile est qu'elles sont effectuées en mode "carte non présente" (c.-à-d. CNP, pour *"card not present"* en anglais). Dans ce mode, aucun dispositif n'étant chargé de vérifier l'intégrité de la carte (comme par exemple un terminal de paiement), il n'est pas possible de vérifier que le détenteur de la carte possède le code PIN nécessaire pour valider une transaction : la carte de paiement n'est pas utilisée pour effectuer la transaction. Seules les données inscrites sur la carte le sont. Ces données peuvent être volées pour effectuer des transactions par des fraudeurs, éventuellement en utilisant d'autres applications marchandes, dans le cadre d'autres paiements mobiles. Accessoirement, le terminal de communication de l'utilisateur (qui comprend toutes les données des cartes de paiement utilisées par celui-ci), peut également être volé, donnant accès au voleur à l'ensemble des données de l'utilisateur et permettant au voleur d'effectuer des transactions frauduleuses.

Ainsi, dans le but de sécuriser les transactions effectuées en mode CNP, des systèmes et des méthodes ont été proposés pour résoudre ces problèmes de fraude. Ces méthodes posent des problèmes de commodité pour l'utilisateur ou d'autres problèmes de sécurité. C'est par exemple la méthode décrite dans le document de brevet WO2012053780. Dans ce document, un système et une méthode de vérification sont décrits. Plus particulièrement un procédé et un système utilisant des informations sur l'adresse MAC d'un terminal client sont décrits. Lors d'une transaction impliquant un paiement, un processus d'authentification est mis en œuvre dans lequel l'adresse MAC du terminal utilisé par l'utilisateur souhaitant effectuer un paiement est comparée à une adresse MAC de référence, définie ou obtenue par le serveur bancaire, serveur qui doit autoriser un paiement ou une transaction.

Cette méthode, bien que potentiellement intéressante, est néanmoins peu pratique. En effet, d'une part, cette méthode oblige l'utilisateur à toujours utiliser le même appareil pour effectuer un paiement (sauf à définir plusieurs appareils autorisés à effectuer une transaction). D'un autre côté, il existe de nombreuses méthodes pour falsifier une adresse MAC d'un périphérique.

D'autres méthodes sont également disponibles. Certains impliquent de fournir à l'utilisateur des numéros de cartes bancaires uniques. Ces numéros sont fournis en fonction des besoins du client. Cette méthode est intéressante mais ne supprime pas la possibilité pour l'utilisateur d'utiliser ses propres informations de carte pour effectuer des transactions. D'autres méthodes, actuellement largement utilisées, consistent à transmettre un message de type SMS au client qui effectue une transaction pour s'assurer qu'il est le porteur de la carte. L'utilisateur doit saisir, au moment de la transaction, un mot de passe transmis dans le SMS. Par conséquent, la banque s'assure avec une probabilité raisonnable que celui qui effectue la transaction est l'utilisateur. Cette méthode présente deux inconvénients : d'une part, elle oblige l'utilisateur à fournir son numéro de téléphone à la banque avant toute transaction et de manière sécurisée ; d'autre part, et surtout cette méthode ne fonctionne que si la banque du client est également la banque qui gère la transaction pour le compte du commerçant, ce qui n'est pas nécessairement le cas, surtout à l'étranger, là précisément où la plus grande partie de la fraude est réalisée. Ainsi, la méthode susmentionnée n'est pas très efficace dans ce cas.

### 3. Résumé

La méthode proposée par les inventeurs ne pose pas ces problèmes de l'art antérieur. En effet, il est proposé une méthode de sécurisation de la transaction basée sur l'enregistrement, au sein d'une base de données distribuée, des authentifications de l'utilisateur auprès de son terminal de communication. Plus particulièrement, la présente technique délivre, au sein d'une base de données distribuée, des authentifications d'utilisateurs sur son terminal de communication, ces authentifications étant par la suite utilisée pour valider une transaction réalisée par l'utilisateur.

Plus particulièrement, il est décrit un procédé de traitement d'une transaction, procédé mis en œuvre par un dispositif électronique de traitement de transactions, accessible par l'intermédiaire d'un réseau de communication. Selon l'invention, un tel procédé de traitement comprend une phase de traitement de transaction caractérisée en ce qu'elle comprenant :

- une étape d'obtention d'une empreinte cryptographique contextuelle, préalablement générée au cours d'une authentification d'un utilisateur sur un terminal de communication ;
- une étape de vérification de validité de l'empreinte cryptographique contextuelle au sein d'une chaine de blocs comprenant un ensemble d'empreintes cryptographiques ;
- une étape de validation d'une transaction lorsque l'étape de de vérification de validité de l'empreinte cryptographique contextuelle au sein d'une chaine de blocs est positive.

Ainsi, selon l'invention, on résout au moins partiellement les problématiques de l'art antérieur en s'assurant qu'une transaction, par exemple une transaction de paiement mobile, puisse être validée par l'intermédiaire d'une authentification réussie de l'utilisateur sur son terminal de communication et la validation (et non répudiation) de cette authentification au sein d'une chaine de blocs.

Selon une caractéristique particulière, une empreinte cryptographique contextuelle (**EC**) est matérialisée par une chaine d'identification **ChIEC** de l'empreinte cryptographique **EC** qui est obtenue à partir d'un ensemble **D** de données constitutrices **(d0,...,dn)** de la manière suivante :

$$ChIEC = F\ (G\ (d0,...,dn))$$

dans laquelle :

- **G** est une fonction de mélange de données ;
- **F** est une fonction cryptographique de calcul de la chaine d'identification.

Ainsi, on assure qu'une empreinte cryptographique contextuelle (**EC**) n'est pas reproductible au sein de la chaine de blocs, et qu'elle est unique, à un instant donné, pour un ensemble de données constitutrices.

Selon un mode de réalisation particulier, l'étape d'obtention de l'empreinte cryptographique contextuelle comprend :

- une étape de réception d'une adresse de localisation de l'empreinte cryptographique contextuelle au sein de la chaine de blocs ;

- une étape d'obtention de l'empreinte cryptographique contextuelle à l'adresse précédemment reçue.

Ainsi, l'empreinte cryptographique contextuelle ne peut pas être falsifiée.

Selon une caractéristique particulière, l'étape de vérification de validité de l'empreinte cryptographique contextuelle comprend une étape de vérification de la validité du bloc de la chaine de blocs au sein de laquelle l'empreinte cryptographique contextuelle est insérée.

Ainsi, on assure que l'empreinte cryptographique contextuelle est valide par rapport au bloc lui-même.

Selon une caractéristique particulière, l'étape de vérification de validité de l'empreinte cryptographique contextuelle comprend une étape de détermination que l'empreinte cryptographique contextuelle est la dernière empreinte cryptographique contextuelle en date pour ledit utilisateur et/ou ledit terminal de communication au sein de la chaine de blocs.

Ainsi, on assure qu'in ne puisse utiliser, pour une validation de transaction, que la dernière empreinte cryptographique contextuelle disponible : on résout ainsi les problèmes de rejeux.

Selon une caractéristique particulière, l'étape de vérification de validité de l'empreinte cryptographique contextuelle comprend :

- une étape d'obtention de données de transaction, en provenance du terminal de communication ;
- une étape de calcul, à partir de ces données de transaction, d'une empreinte cryptographique de vérification ;
- une étape de comparaison de empreinte cryptographique de vérification avec l'empreinte cryptographique contextuelle ; et
- une étape de validation de l'empreinte cryptographique contextuelle lorsque la comparaison est positive.

Ainsi, on offre la possibilité supplémentaire de vérifier l'empreinte cryptographique contextuelle par rapport aux données qui la constituent.

Selon un mode de réalisation particulier, l'étape de vérification de validité de l'empreinte cryptographique contextuelle comprend une étape de comparaison d'au moins une donnée de constitution de l'empreinte cryptographique contextuelle avec au moins une donnée correspondante fournie par le terminal de communication.

Selon un mode de réalisation particulier, le procédé de traitement d'une transaction comprend en outre une phase préliminaire d'authentification, au cours de laquelle l'empreinte cryptographique contextuelle est créée, ladite phase préliminaire d'authentification comprenant :

- une étape d'authentification de l'utilisateur ;

- une étape d'obtention d'un message d'authentification, comprenant la confirmation d'authentification de l'utilisateur et un ensemble D de données constitutrices *(d0,...,dn)* ;
- une étape de calcul de l'empreinte cryptographique contextuelle à l'aide des données reçues ;

Selon un mode de réalisation particulier, la phase préliminaire d'authentification comprend en outre :

- une étape d'insertion de l'empreinte cryptographique contextuelle au sein de la chaine de blocs ; et
- lorsque le bloc de la chaine de bloc au sein duquel l'empreinte cryptographique contextuelle a été insérée est validé, une étape de transmission de l'empreinte cryptographique contextuelle au terminal de communication.

Selon un autre aspect, l'invention se rapporte également à un dispositif électronique de traitement de transactions, accessible par l'intermédiaire d'un réseau de communication, ledit dispositif comprenant des moyens de traitement comprenant de transaction. Un tel dispositif comprend :

- des moyens d'obtention d'une empreinte cryptographique contextuelle, préalablement générée au cours d'une authentification d'un utilisateur sur un terminal de communication ;
- des moyens de vérification de validité de l'empreinte cryptographique contextuelle au sein d'une chaine de blocs comprenant un ensemble d'empreintes cryptographiques ;
- des moyens de validation d'une transaction mis en œuvre lorsque les moyens de vérification de validité de l'empreinte cryptographique contextuelle au sein d'une chaine de blocs fournissent une information positive.

Il est entendu, dans le cadre de la description de la présente technique selon l'invention, qu'une étape de transmission d'une information et/ou d'un message d'un premier dispositif à un deuxième dispositif, correspond au moins partiellement, pour ce deuxième dispositif à une étape de réception de l'information et/ou du message transmis, que cette réception et cette transmission soit directe ou qu'elle s'effectue par l'intermédiaire d'autres dispositifs de transport, de passerelle ou d'intermédiation, y inclus les dispositifs décrits dans la présente selon l'invention .

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés, mis en œuvre au niveau du terminal de communication, du serveur d'authentification et du serveur marchand.

En conséquence, l'invention vise aussi des programmes, susceptibles d'être exécutés par un ordinateur ou par un processeur de données, ces programmes comportant des instructions pour commander l'exécution des étapes des procédés tel que mentionnés ci-dessus.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

## 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 décrit un système dans lequel l'invention est mise en œuvre ;
- la figure 2 décrit un mode de réalisation dérivé du procédé de traitement de transaction ;
- la figure 3 décrit un mode de réalisation dérivé du procédé de traitement de transaction ;
- la figure 4 illustre une architecture d'un serveur apte à mettre en œuvre un procédé de traitement de transaction ;
- la figure 5 illustre une architecture d'un client apte à mettre en œuvre un procédé de traitement de transaction.

## 5. Description

### 5.1. Rappels du principe

Il a été exposé précédemment que la mise en œuvre de transaction de paiement en mode « carte non présente » augmente le risque de fraude. L'objet de la présente technique est de remédier, au moins en partie, à certains inconvénients des transactions en mode « *carte non présente* » en introduisant un mécanisme de vérification d'identité, permettant de fournir au marchand *(détenteur d'un service de vente en ligne, par l'intermédiaire d'un -ensemble de- serveurs- marchand-s-)* une confirmation *(avec une certitude raisonnable)* de l'identité de l'utilisateur (et de sa légitimité à effectuer l'achat et la transaction de paiement résultante). Dans le cadre de la présente technique, on met en œuvre une chaine de blocs, la chaine de blocs enregistrant des caractéristiques d'authentifications successives d'utilisateurs (ces caractéristiques étant appelées des empreintes cryptographiques contextuelles).

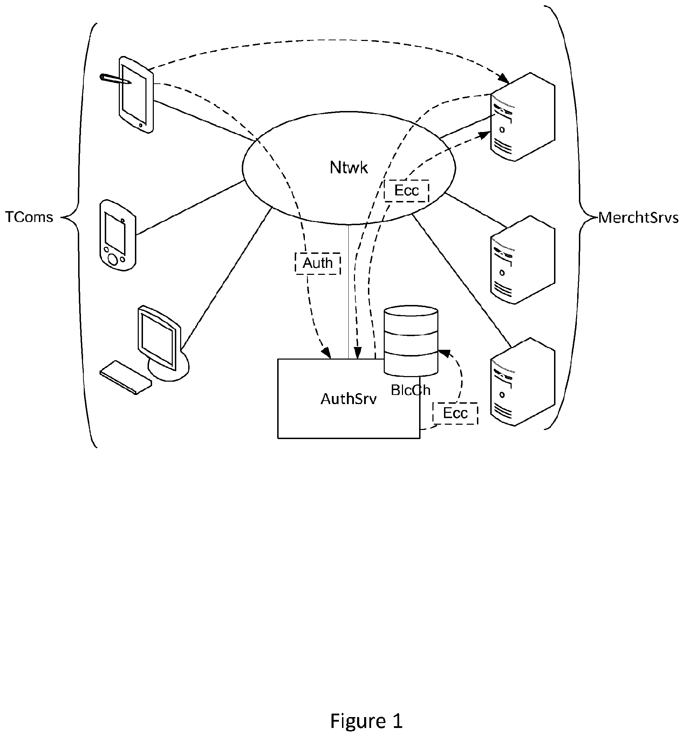

Dans un mode de réalisation, décrit en relation avec la figure 1, la technique est mise en œuvre au sein d'un système comprenant plusieurs entités différentes, coopérant et mettant chacune d'entre elles en œuvre une méthode adaptée. Plus particulièrement, le système comprend :

- un serveur d'authentification (AuthSrv), mettant en œuvre une chaine de blocs, dans laquelle les preuves d'authentification des utilisateurs sont enregistrées, dans une chaine de blocs (BlcCh) ;
- un ensemble de terminaux de communication (TComs), chaque terminal étant possédé par un utilisateur qui utilise son terminal de communication pour effectuer des achats et/ou réaliser des transactions ;
- un ensemble de serveurs marchands (MerchtSrvs), détenus et mis en œuvre par un ou plusieurs fournisseurs de biens et/ou de services en lignes accessibles par l'intermédiaire des terminaux de communications ;

Ces serveurs et terminaux échangent des données par l'intermédiaire d'un ou plusieurs réseaux de communications (Ntwk) auxquels ils sont connectés.

Le principe général de la technique consiste à transmettre, au serveur marchand, une empreinte cryptographique contextuelle (Ecc), représentative d'une authentification (auth) d'un utilisateur sur son terminal de communication, cette empreinte cryptographique contextuelle (Ecc) pouvant être vérifiée par le serveur d'authentification avant validation de la transaction de paiement par le serveur marchand et ou un serveur transactionnel (serveur bancaire, serveur de *l'issuer* des données de paiement). Dans un premier mode de réalisation, le serveur d'authentification est en mesure de valider l'empreinte cryptographique contextuelle transmise par le (ou pour le compte du) terminal de communication au serveur marchand, et ce grâce à la chaine de blocs (BlcCh) qu'il met en œuvre. Dans un deuxième mode de réalisation, le serveur d'authentification est en mesure de calculer l'empreinte cryptographique contextuelle du terminal de communication, puis de la transmettre au serveur marchand, toujours grâce à la chaine de blocs (BlcCh) qu'il met en œuvre. On dispose ainsi d'une certaine assurance de l'authentification de l'utilisateur lorsque la transaction est validée, ce qui permet de réduire de manière importante le taux de fraude des moyens de paiement.

Selon la présente technique, dans un mode de réalisation, une empreinte cryptographique est *issue* d'une structure de données qui comprend :

- des données constitutrices : des données relatives à l'authentification comme un horodatage, un émetteur (par exemple identifiant de terminal de communication), un récepteur (par exemple identifiant d'un service d'authentification) ;
- optionnellement un nombre de blocs ayant confirmé l'empreinte cryptographique fournie (nombre de blocs de validation) ;
- et éventuellement d'autres informations de contexte :

adresse IP, position géographique, empreinte cryptographique précédente (de l'utilisateur), etc.).

L'empreinte en tant que telle est une chaine d'identification (identifiant de l'empreinte cryptographique), résultant d'un calcul effectué sur les données de constitution de l'empreinte cryptographique précédemment listées. Cette empreinte cryptographique (chaine d'identification) peut une fois ce calcul effectué, être intégrée à la structure de données précédemment décrite. Cette structure de données peut, selon les cas être conservée par le serveur d'authentification dans une base de données spécifiquement dédiée à cet effet, être intégrée dans la chaine de blocs, ou encore être supprimée, s'il n'est pas nécessaire de disposer d'un accès à ces données.

Une empreinte cryptographique de référence (dont la mise en œuvre est décrite par la suite) peut également comprendre (et/ou être issue) des données relatives à l'authentification de l'utilisateur (signatures biométriques, signature d'identifiant, signature de mot de passe, etc.). Une empreinte cryptographique contextuelle peut comprendre (et/ou être issue d') une référence (par exemple sous la forme d'une chaine d'identification) à une empreinte cryptographique précédente.

Soit **D** l'ensemble des données constitutrices (initiatrices) **(d0,...,dn)** de l'empreinte cryptographique **EC.** Soit F, la fonction cryptographique de calcul de la chaine d'identification **ChIEC** qui est considérée comme l'empreinte cryptographique **EC.** Soit **G** une fonction de mélange (mixité) de données. La chaine d'identification **ChIEC** de l'empreinte cryptographique **EC** est calculée de la manière suivante :

$$ChIEC = F (G (d0,...,dn))$$

La fonction de calcul **F** et la fonction de mixité **G** ne sont pas spécifiquement détaillées et dépendent des conditions de mise en œuvre opérationnelle de la chaine de blocs au niveau des serveurs d'authentification. La fonction G est une fonction de mélange de données du type fonction de concaténation, addition hexadécimale, multiplication, modulo décimale, module hexadécimale ou modulo binaire, rotation (décimale, hexadécimale, binaire), etc. La fonction **F** peut par exemple être une fonction de hachage (par exemple la fonction MD5 ou la fonction SHA1) du résultat de la fonction G. L'empreinte de hachage (ou « valeur de hash ») obtenue forme ainsi un condensat cryptographique représentatif des données constitutrices, sans qu'il soit possible de retrouver ces données constitutrices à partir de cette empreinte de hachage. Dans la suite et dans ce qui précède, on utilise principalement le terme *« empreinte cryptographique »* **(EC)** pour se référer à la chaine d'identification de celle-ci (c'est-à-dire à l'identifiant de l'empreinte cryptographique **ChIEC**), qui permet d'identifier cette empreinte cryptographique au sein de la chaine de blocs.

D'une manière générale, la technique proposée est basée sur plusieurs phases de création et de traitement de données d'authentification.

Dans une première phase d'inscription, un utilisateur a effectué les démarches nécessaires à son inscription en ligne à un service, lequel service peut gérer l'authentification de l'utilisateur. Par exemple, cette inscription peut avoir lieu lorsque l'utilisateur active son terminal de communication pour la première fois. Dans cette phase d'inscription, l'utilisateur fournit, à l'entité jouant le rôle de serveur d'authentification, les données nécessaires à l'inscription (nom, prénom) et à la future authentification (mot de passe et/ou empreintes digitales et/ou iris et/ou autres données biométriques ou autres).

Le serveur d'authentification stocke ces éléments de manière sécurisée. De plus, *selon la présente technique,* le serveur d'authentification peut calculer, à partir de ces éléments, une empreinte cryptographique de référence. Cette empreinte cryptographique de référence, calculée par le serveur d'authentification (selon des modalités identiques à celles présentées précédemment), peut être insérée dans une chaine de blocs (et transmise, en retour au terminal de communication qui l'enregistre dans un espace mémoire sécurisé). Il s'agit normalement de la même chaine de blocs que celle qui est utilisée pour globaliser les authentifications successives des utilisateurs vis-à-vis du serveur d'authentification (ou de la ferme de serveurs d'authentification). Comme exposé précédemment, la chaine de blocs n'est pas, normalement, une chaine de blocs publique, mais plutôt d'une chaine de blocs privée, réservée à l'usage du serveur d'authentification (ou de l'ensemble des serveurs d'authentification) et optionnellement de certains serveurs marchands (serveurs de ventes en ligne) disposant d'un accès à cette chaine de blocs. Les conditions de partage de cette chaine de blocs avec des serveurs marchands seront exposées par la suite, dans le cadre d'un mode de réalisation particulier de l'invention. Alternativement, l'empreinte cryptographique de référence peut être calculée par le terminal de communication lui-même et transmise au serveur d'authentification (avec optionnellement les données constitutrice de celle-ci).

Quoi qu'il en soit, à l'issue de cette phase d'inscription le ou les serveurs d'authentification possèdent les éléments nécessaires à l'authentification de l'utilisateur. Lorsque l'utilisateur démarre ou utilise son terminal mobile, il effectue une action d'authentification vis-à-vis du serveur d'authentification. Cette action d'authentification est soit explicite (un service d'authentification requiert explicitement l'authentification de l'utilisateur sur son terminal) soit implicite (au cours de l'utilisation ou du démarrage du terminal, une authentification au service a été réalisée, par exemple lors du déverrouillage du terminal de communication ou lors d'une connexion par défaut à un service donné, par l'intermédiaire du terminal de communication, par exemple service de messagerie électronique, service d'authentification centralisé). Plus particulièrement une authentification implicite est par exemple réalisée au démarrage du terminal de communication lorsque l'utilisateur saisit un mot de passe ou fournit des données biométriques : le serveur d'authentification, par le biais d'un message qu'il reçoit de la part du terminal de communication, est informé du fait que l'utilisateur a été correctement authentifié sur le terminal de communication. D'autres modes d'authentification explicites ou implicites peuvent également être mis en œuvre : il s'agit de confirmer ou d'informer le serveur que l'authentification sur le terminal de communication ou auprès d'un service en ligne s'est correctement déroulée.

Selon la présente technique, ces méthodes ont en commun le fait que le terminal de communication effectue une authentification de l'utilisateur, en local ou en coopération avec le ou les serveurs d'authentification, par rapport à un certain nombre de données (et/ou de caractéristiques) authentifiées. Plus particulièrement, le terminal et/ou le serveur confronte les données (et/ou caractéristiques) fournies par l'utilisateur avec des données de référence. Les données de référence sont obtenues lors de la phase d'inscription (voir précédemment) et stockées en mémoire sécurisée (sur le terminal de communication et/ou sur le serveur d'authentification). Lors de l'authentification implicite ou explicite, le fait d'avoir effectué une authentification valide est enregistré au sein du serveur d'authentification, postérieurement à la réception d'un message par le serveur d'authentification.

Le message reçu par le serveur d'authentification contient d'une part des données de validation de l'authentification (par exemple hash du mot de passe ou signature de l'empreinte digitale ou d'iris, voire empreinte cryptographique) qui sont accompagnées ou associées à des données contextuelles (par exemple la date, l'heure de l'authentification, une identification éventuelle du terminal de communication, numéro de série, IMEI, etc. et/ou d'autres données contextuelles pertinentes). Ces données sont utilisées, par le serveur d'authentification, pour calculer une empreinte cryptographique « contextuelle », comme exposé précédemment. Cette empreinte cryptographique contextuelle (différente potentiellement de l'empreinte cryptographique de référence) est insérée dans la chaine de blocs (et est optionnellement liée à une empreinte cryptographique précédente de l'utilisateur). L'empreinte cryptographique contextuelle (ou une référence à l'empreinte cryptographique contextuelle, par exemple une URL) est ensuite retournée au terminal de communication, qui la stocke dans une mémoire sécurisée (par exemple dans le même slot mémoire que l'empreinte cryptographique de référence).

Alternativement un lien ou une référence vers l'empreinte cryptographique contextuelle peut être transmise au terminal de communication. Cette empreinte cryptographique contextuelle constitue la preuve de l'authentification réussie du terminal de communication. La réception de cette preuve par le terminal de communication (le fait d'avoir cette empreinte cryptographique contextuelle enregistrée sur le terminal de communication, ou le fait d'avoir un lien ou une référence vers cette empreinte cryptographique contextuelle), valide le fait (l'état), d'être correctement authentifié par le serveur d'authentification et valide l'état de l'enregistrement de cette authentification au sein de la chaine de blocs.

Plus particulièrement, en fonction des modes de réalisation, l'empreinte cryptographique contextuelle n'est transmise au terminal de communication que lorsque le bloc courant de la chaine de blocs (dans lequel l'empreinte cryptographique contextuelle est enregistré) est validé (c'est-à-dire complet et que la fermeture de ce bloc courant est cryptographiquement validée et vérifiée), et qu'un nouveau bloc (au moins) est créé dans la chaine de blocs. Plus particulièrement, dans ces implémentations, l'empreinte cryptographique contextuelle n'est délivrée au terminal de communication que lorsque l'on est assuré que celle-ci n'est plus modifiable au sein de la chaine de blocs. Cette absence de possibilité de modification n'est apportée, du point de vue de la chaine de blocs, que lorsque le bloc courant est complet et validé, et qu'un nouveau bloc est « ouvert » pour enregistrer les authentifications (et/ou inscriptions) suivantes. En d'autres termes, la transmission, au terminal de communication, de l'empreinte cryptographique contextuelle (ou d'un lien ou d'une référence vers celle-ci), n'est pas immédiate et dépend essentiellement du temps mis par le système dans son intégralité à fermer le bloc courant de la chaine de blocs (temps au demeurant relativement court, si l'on se rapporte au nombre d'authentifications réalisées chaque jour).

Une fois que l'empreinte cryptographique contextuelle (ou son lien ou sa référence) est reçue par le terminal de communication, celle-ci peut être utilisée dans le cadre de la mise en œuvre de transactions entre le terminal de communication et un ou plusieurs fournisseurs de biens et/ou de services avec qui l'utilisateur (du terminal de communication) souhaite effectuer des transactions.

Plus particulièrement, lors de la mise en œuvre d'une transaction à partir du terminal de communication (un exemple de mise en œuvre est décrit par la suite), l'empreinte cryptographique contextuelle est utilisée pour faire la preuve de l'authentification de l'utilisateur (et de sa présence par la même occasion). Plusieurs méthodes peuvent être mise en œuvre pour atteindre cet objectif de validation de l'authentification. D'une manière générale, ces méthodes partagent les caractéristiques suivantes :

- l'utilisateur s'identifie auprès du fournisseur de biens et/ou de services (par l'intermédiaire d'un couple login/mot de passe, authentification implicite ou explicite ou par d'autres moyens) ;
- l'utilisateur effectue une sélection de biens ou de services dont il souhaite faire l'acquisition ;
- l'utilisateur effectue une action de paiement, comprenant notamment la fourniture de données de paiement (par exemple de données de carte de paiement) ;

- le serveur marchand réceptionne les données de paiement et initie une transaction de paiement, celle-ci nécessitant l'obtention d'une autorisation en provenance d'un serveur transactionnel (serveur bancaire ou serveur de l'issuer) ;

- lorsque le serveur transactionnel répond positivement à la requête de paiement transmise par le serveur marchand, la transaction est validée et le paiement effectué.

Selon la présente technique, ces étapes sont modifiées et l'empreinte cryptographique contextuelle est utilisée pour prouver la présence de l'utilisateur, voire pour valider la transaction elle-même. Plus particulièrement, l'empreinte cryptographique contextuelle est transmise en plus (ou à la place) des données de paiement. Le terminal de communication transmet l'empreinte cryptographique contextuelle au serveur marchand (la méthode de transmission peut être directe ou indirecte, comme cela est expliqué par la suite). Le serveur marchand reçoit cette empreinte cryptographique et la transmet au serveur d'authentification (le serveur d'authentification peut être le serveur transactionnel dans le cas présent, bien que cela ne soit pas obligatoire).

En fonction des modes de réalisation, la méthode de transmission de l'empreinte cryptographique contextuelle peut être directe ou indirecte. Lorsque la transmission est directe, le terminal de communication transmet cette l'empreinte cryptographique contextuelle dans un message à destination du serveur marchand. Le serveur marchand entre donc en possession de l'empreinte cryptographique contextuelle par l'intermédiaire du terminal de communication lui-même. Cette méthode présente l'intérêt de limiter les interactions entre le serveur marchand et par exemple le serveur d'authentification ou un autre serveur. Dans la mesure où l'empreinte cryptographique contextuelle du terminal de communication est (initialement) reçue directement depuis le serveur d'authentification et stockée de manière sécurisée sur le terminal de communication, on estime raisonnablement que celle-ci ne peut pas être compromise et qu'elle conserve sa valeur en tant que preuve d'authentification. Lorsque la transmission est indirecte, le terminal de communication transmet au serveur marchand un lien (par exemple une URL ou une URI) pointant vers cette l'empreinte cryptographique contextuelle. L'avantage est que le terminal de communication ne possède pas l'empreinte cryptographique contextuelle. Même si le terminal de communication est compromis, l'empreinte cryptographique contextuelle est sécurisée au niveau du serveur d'authentification. Lorsque le serveur marchand reçoit le lien vers l'empreinte cryptographique contextuelle (lien qui le dirige vers le serveur d'authentification (ou le serveur transactionnel ou autre et/ou vers la chaine de blocs)), il lui est possible de vérifier la validité de l'empreinte cryptographique contextuelle au sein de la chaine de blocs. Ainsi, cette deuxième possibilité est avantageuse lorsque la chaine de blocs est accessible à plusieurs acteurs identifiés (comme par exemple le serveur d'authentification, le serveur marchand et/ou le serveur transactionnel). Le lien (la référence) transmise permet d'accéder à la chaine de bloc, gérée par le ou les serveurs transactionnels).

Quelle que soit la méthode employée (directe ou indirecte), le serveur marchand (ou le serveur d'authentification ou le serveur transactionnel) vérifie la validité de l'empreinte cryptographique contextuelle fournie, au sein de la chaine de blocs, notamment en vérifiant si l'empreinte cryptographique contextuelle fournie est valide compte tenu du bloc au sein de laquelle elle est-insérée (première vérification) et optionnellement si l'empreinte cryptographique contextuelle fournie est la dernière empreinte cryptographique contextuelle en date de l'utilisateur (deuxième vérification). Pour la première vérification, le serveur qui effectue la vérification, obtient à partir de l'empreinte cryptographique contextuelle fournie, des données relatives à l'authentification : horodatage, émetteur (par exemple identifiant de terminal de communication), récepteur (par exemple identifiant d'un service d'authentification), et un nombre de blocs ayant confirmé l'empreinte cryptographique contextuelle fournie (nombre de blocs de validation) et éventuellement d'autres informations de contexte : adresse IP, position géographique, empreinte cryptographique précédente (de l'utilisateur), etc.). Le serveur est en mesure, à partir de ces données de vérifier qu'elles fournissent (après calcul) une empreinte identique à l'empreinte cryptographique contextuelle fournie.

Pour la deuxième vérification, l'empreinte cryptographique contextuelle est liée à une empreinte cryptographique précédente (c'est-à-dire soit l'empreinte cryptographique contextuelle précédente soit l'empreinte cryptographique de référence).

Dans une première variante, distincte ou complémentaire de la deuxième variante, les différentes empreintes cryptographiques contextuelles d'un utilisateur sont chainées les unes avec les autres au sein de la chaine de blocs, formant ainsi, en tant que telles, une chaine à l'intérieur de la chaine de blocs : les empreintes cryptographiques contextuelles successives sont utilisées pour créer une empreinte cryptographique contextuelle courante. Plus particulièrement, dans ce schéma, l'empreinte cryptographique contextuelle de référence est considérée comme l'empreinte au temps t0 (c'est-à-dire à l'inscription de l'utilisateur). L'empreinte cryptographique contextuelle calculée au temps t1 (t1>t0), lors de l'authentification de l'utilisateur), tient compte de l'empreinte cryptographique de référence (par exemple en étant intégré (en tant que donnée constitutive) dans le calcul de l'empreinte cryptographique contextuelle calculée au temps t1). L'empreinte cryptographique contextuelle calculée au temps t2 (t2>t1>t0), lors de l'authentification de l'utilisateur, tient compte de l'empreinte cryptographique précédente (par exemple en intégrant l'empreinte cryptographique contextuelle calculée au temps t1) et ainsi de suite. On dispose dans ce cas d'une mesure de sécurité supplémentaire assurant qu'une ancienne empreinte cryptographique contextuelle d'un utilisateur ne puisse être réutilisée. Cette chaine est appelée chaine d'empreintes cryptographiques contextuelles. Elle est unitaire et associé à un seul couple utilisateur/ terminal de communication. Elle est représentative d'une timeline (ligne temporelle) d'authentifications successives réalisées par l'utilisateur pour son terminal de communication et assure qu'à un instant donné, une seule empreinte cryptographique contextuelle peut être utilisée pour valider une transaction (i.e. la dernière, au sens dernière empreinte cryptographique contextuelle en date). De ce fait, il est très difficile (voire impossible) de tenter de réutiliser une ancienne empreinte cryptographique contextuelle de l'utilisateur (par une attaque par rejeu par exemple).

Dans une deuxième variante, distincte ou complémentaire de le première, l'empreinte cryptographique contextuelle est systématiquement liée à l'empreinte cryptographique de référence. Plus particulièrement, l'empreinte cryptographique contextuelle est calculée à partir de l'empreinte cryptographique de référence de l'utilisateur. Ainsi, lorsqu'elle vérifie l'empreinte cryptographique contextuelle, l'entité de vérification (serveur d'authentification, serveur marchand, serveur transactionnel) est en mesure de vérifier également l'authenticité de l'empreinte cryptographique de référence, à l'aide des données d'inscription qu'elle possède.

### 5.2. Description d'un premier mode de réalisation

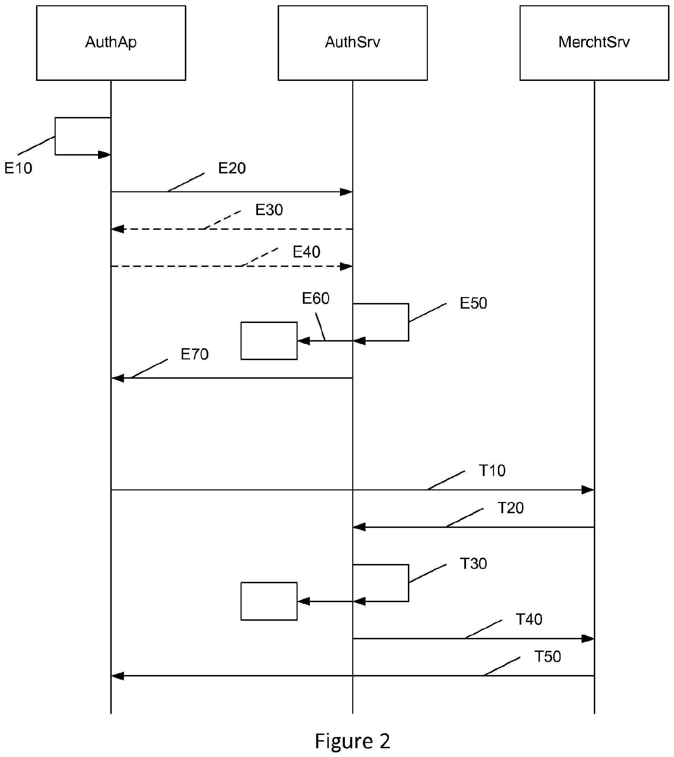

Le premier mode de réalisation est explicité en relation avec la figure 2. Il comprend une première phase dite d'authentification et une deuxième phase dite de traitement de transaction.

Le première phase d'authentification comprend :

- une étape d'authentification E10 de l'utilisateur sur son terminal de communication ou auprès du serveur d'authentification, cette étape d'authentification ayant lieu entre par exemple une application d'authentification (AuthAp) et l'utilisateur ; cette étape peut être consécutive à une demande explicite d'authentification ou être implicite (commandée par l'utilisation du terminal de communication) ;
- une étape de transmission E20, au serveur d'authentification, d'un message d'authentification, comprenant la confirmation d'authentification de l'utilisateur et des données complémentaires ;
- optionnellement une étape de transmission E30 d'une requête en provenance du serveur d'authentification en vue d'obtenir des données complémentaires si celles-ci ne sont pas transmises avec le message d'authentification ;

- et optionnellement, une étape E40 de transmission de ces données complémentaires ;
- une étape de calcul E50 d'une empreinte cryptographique contextuelle à l'aide des données reçues en provenance du terminal de communication ;
- une étape d'insertion E60 de l'empreinte cryptographique contextuelle au sein de la chaine de blocs ; et
- lorsque le bloc de la chaine de bloc au sein duquel l'empreinte cryptographique contextuelle a été insérée est validé, une étape de transmission E70 de l'empreinte cryptographique contextuelle au terminal de communication (selon l'un des modes de transmission préalablement décrit, direct ou indirect, par l'intermédiaire d'une adresse de localisation de l'empreinte au sein de la chaine de blocs) ;

Une fois cette phase d'authentification terminée, le terminal de communication dispose d'une empreinte cryptographique contextuelle (ou d'une adresse vers celle-ci) et le serveur d'authentification dispose de cette empreinte cryptographique contextuelle également. Comme indiqué précédemment, cette phase d'authentification peut être itérée plusieurs fois avant que le terminal de communication n'initie la phase de traitement de transaction (auquel cas le terminal de communication dispose de la dernière empreinte cryptographique contextuelle en date, c'est à dire la dernière créée).

La deuxième phase de traitement de transaction comprend :

- une étape de transmission T10 par le terminal de communication, d'une requête de validation de transaction, comprenant l'empreinte cryptographique contextuelle (ou sa référence) au serveur marchand ; cette étape peut être consécutive à la validation d'un panier d'achat sur le site du marchand par exemple ou encore être consécutive à la fourniture, par le terminal de paiement de données de paiement à un serveur transactionnel (le serveur marchand étant alors remplacé par un serveur transactionnel) ;
- une étape de T20 de transmission, par le serveur marchand (ou le serveur transactionnel), de l'empreinte cryptographique contextuelle au serveur d'authentification ;
- une étape de vérification T30, de la validité de l'empreinte cryptographique contextuelle par le serveur d'authentification ; et
- lorsque l'empreinte cryptographique contextuelle est valide, une étape de transmission T40 au serveur marchand (ou au serveur transactionnel) d'un message de validation de l'empreinte cryptographique contextuelle
- une étape de T50 de transmission, au terminal de communication, d'un message de validation de transaction.

Ainsi, dans ce mode de réalisation, l'empreinte cryptographique contextuelle est utilisée pour faire la preuve de l'authentification de l'utilisateur (et de sa présence « récente » par la même occasion). Le terminal de communication transmet l'empreinte cryptographique contextuelle au serveur marchand qui l'utilise pour vérifier sa validité auprès du serveur d'authentification.

L'étape de vérification T30, de la validité de l'empreinte cryptographique contextuelle peut se limiter à constater la validité du bloc dans laquelle l'empreinte cryptographique contextuelle est enregistrer et ainsi se baser sur le caractère de confiance de la chaine de blocs, sans autre forme de vérification plus complexe. Cette vérification peut également comprendre le calcul, à l'aide des données transmises par le terminal de communication (en sus de l'empreinte cryptographique contextuelle) d'une empreinte cryptographique de vérification et la comparaison de cette empreinte cryptographique de vérification avec l'empreinte cryptographique contextuelle fournie. Astucieusement, la vérification de la validité comprend une vérification du fait que l'empreinte cryptographique contextuelle est la dernière en date pour l'utilisateur et/ou le terminal de communication. Par ailleurs, la vérification comprend la vérification de l'identité d'au moins une des données ayant servi à créer l'empreinte cryptographique contextuelle avec une donnée en possession du serveur qui effectue cette vérification (comme par exemple un hash d'une donnée de carte bancaire et/ou un hash d'une donnée biométrique et/ou un hash d'un mot de passe et/ou d'un login). L'implémentation effective de cette vérification est dépendante des conditions opérationnelles de mise en œuvre. Lorsque la vérification est positive, l'empreinte est validée (c'est-à-dire qu'une donnée, par exemple un booléen) valide l'authenticité de l'empreinte (et/ou du bloc dans laquelle elle est insérée).

## 5.3. Description d'un deuxième mode de réalisation

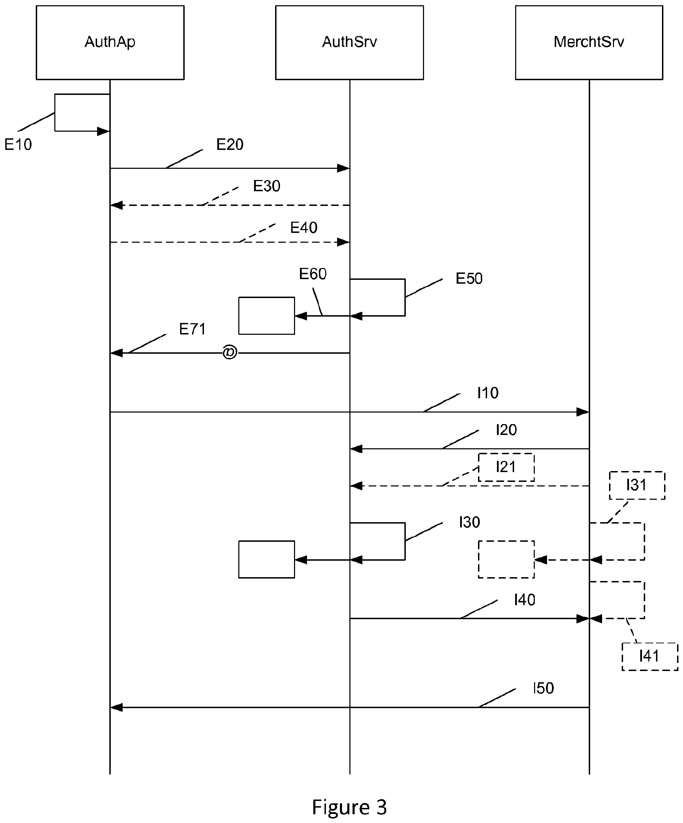

Dans ce deuxième mode de réalisation, la chaine de blocs est partagée avec les serveurs marchand (soit directement soit par l'intermédiaire d'un serveur transactionnel). La phase d'authentification est identique à celle décrite en relation avec la figure 2 et n'est pas décrite à nouveau (la seule différence étant la réception E71, par le terminal de communication, d'une adresse (@) à laquelle se situe l'empreinte cryptographique contextuelle (plutôt que sa transmission directe). Ainsi, la phase de traitement de transaction, décrite en relation avec la figure 3, comprend alors :

- une étape de transmission I10 par le terminal de communication, d'une requête de validation de transaction, comprenant l'adresse de l'empreinte cryptographique contextuelle au serveur marchand ;
- une étape de I20 de transmission, par le serveur marchand, à un serveur transactionnel de l'adresse de l'empreinte cryptographique contextuelle ; ou

    o une étape de I21 d'accès, par le serveur marchand, à l'adresse de la chaine de blocs comprenant l'empreinte cryptographique contextuelle ;

- une étape de vérification I30, de la validité de l'empreinte cryptographique contextuelle par le serveur transactionnel ; ou

    o une étape de vérification I31, de la validité de l'empreinte cryptographique contextuelle par le serveur marchand ;

- lorsque l'empreinte cryptographique contextuelle est valide, une étape de transmission I40 par le serveur transactionnel, au serveur marchand, d'un message de validation de l' empreinte cryptographique contextuelle, si le serveur transactionnel est en coupure du serveur marchand (sinon, une étape de vérification I41 par la serveur marchand lui-même) ;
- une étape I50 de transmission, au terminal de communication, d'un message de validation de transaction.

Ainsi, dans ce mode de réalisation, l'empreinte cryptographique contextuelle est utilisée pour faire la preuve de l'authentification de l'utilisateur, de manière indirecte, sans faire appel au serveur d'authentification, qui conserve sa seule fonction d'authentification des utilisateurs sur leurs terminaux. Le terminal de communication transmet l'adresse de l'empreinte cryptographique contextuelle au serveur marchand qui l'utilise pour vérifier sa validité (soi directement soi à l'aide du serveur transactionnel). Ce mode de réalisation présente l'avantage de ne pas mettre l'empreinte cryptographique contextuelle à disposition du terminal de communication, augmentant ainsi la sécurité (car diminuant le risque de vol de cette empreinte cryptographique contextuelle).

L'étape de vérification de la validité de l'empreinte cryptographique contextuelle est la même que pour le premier mode de réalisation et peut être unique ou multiple, en fonction du chainage ou non de cette empreinte cryptographique contextuelle avec une empreinte cryptographique précédente (de référence ou contextuelle).

## 5.4. Dispositif pour la mise en œuvre de l'invention

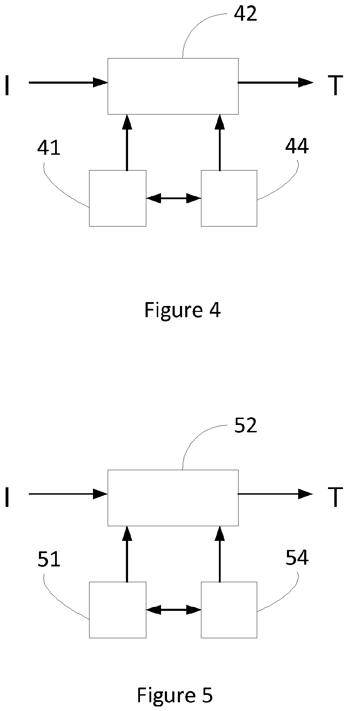

On présente, en relation avec la figure 4, une architecture simplifiée d'un serveur d'authentification apte à gérer des empreintes contextuelles en conjonction avec des dispositifs mobiles. Un serveur d'authentification comprend une mémoire 41, une unité de traitement 42 équipée par exemple d'un microprocesseur, et pilotée par le programme d'ordinateur 43, mettant en œuvre le procédé tel que précédemment décrit. Dans au moins un mode de réalisation, l'invention est mise en œuvre sous la forme d'une application installée sur un serveur. Un tel serveur comprend :

- des moyens d'obtention d'une empreinte cryptographique contextuelle, préalablement générée au cours d'une authentification d'un utilisateur sur un terminal de communication ;
- des moyens de vérification de validité de l'empreinte cryptographique contextuelle au sein d'une chaine de blocs comprenant un ensemble d'empreintes cryptographiques ;
- des moyens de validation d'une transaction lorsque les moyens de vérification de validité de l'empreinte cryptographique contextuelle au sein d'une chaine de blocs fournissent une réponse positive.

On présente, en relation avec la figure 5, une architecture simplifiée d'un dispositif mobile apte à effectuer des transactions à l'aide d'une empreinte contextuelle. Un tel dispositif mobile comprend une mémoire 51, une unité de traitement 52 équipée par exemple d'un microprocesseur, et pilotée par le programme d'ordinateur 53, mettant en œuvre le procédé selon l'invention. Dans au moins un mode de réalisation, l'invention est mise en œuvre sous la forme d'une application mobile installée sur un dispositif mobile en possession de l'utilisateur. Un tel dispositif mobile comprend :

- des moyens de génération d'une empreinte cryptographique contextuelle ou de référence ;
- des moyens de transmission de ladite empreinte cryptographique et/ou de données de constitution de cette empreinte à un serveur d'authentification ;
- des moyens de réalisation de transaction de paiement auprès d'un serveur marchand, comprenant la mise en œuvre des moyens de transmission d'une empreinte cryptographique contextuelle et/ou d'un lien vers une empreinte cryptographique contextuelle;
- des moyens de réception d'une donnée représentative de la validation de la transaction par ledit serveur.

Ces moyens se présentent sous la forme d'une application logicielle spécifique, ou encore sous la forme de composants matériels dédiés, tel qu'un élément de sécurisation (SE) ou un environnement d'exécution sécurisé. L'élément de sécurisation peut se présenter sous la forme d'une carte Sim, USim, UICC, ou encore un composant de sécurité spécifique, greffé sur la carte mère du terminal de communication. Plus particulièrement, dans au moins un mode de réalisation, ces moyens se présentent sous la forme de plusieurs composants matériels auxquels sont adjoint plusieurs composants logiciels. Plus particulièrement, les moyens d'émission sont par exemple compris dans un composant sécurisé qui comprend par exemple un accès plus ou moins direct à un contrôleur d'émission/réception, permettant d'interroger directement un serveur. Ce composant sécurisé est en charge de la détermination au moins partielle d'un paramètre de calcul du code de certification. Les autres composants du terminal de communication ont fait l'objet d'une description en lien avec le mode de réalisation proposé.

**Revendications**

1. Procédé de traitement d'une transaction, procédé mis en œuvre par un dispositif électronique de traitement de transactions, accessible par l'intermédiaire d'un réseau de communication, ledit procédé de traitement comprenant une phase de traitement de transaction **caractérisée en ce qu'**elle comprenant :

   - une étape d'obtention (T10, T20, I10, I20, I21) d'une empreinte cryptographique contextuelle, préalablement générée au cours d'une authentification d'un utilisateur sur un terminal de communication ;
   - une étape de vérification (T30, I30) de validité de l'empreinte cryptographique contextuelle au sein d'une chaine de blocs comprenant un ensemble d'empreintes cryptographiques, ladite étape de vérification (T30, I30) de validité de l'empreinte cryptographique contextuelle comprenant une étape de détermination que l'empreinte cryptographique contextuelle est la dernière empreinte cryptographique contextuelle en date pour ledit utilisateur et/ou ledit terminal de communication au sein de la chaine de blocs ;
   - une étape de validation (T40, I40) d'une transaction lorsque l'étape de de vérification (T30, I30) de validité de l'empreinte cryptographique contextuelle au sein de la chaine de blocs est positive.

2. Procédé de traitement d'une transaction selon la revendication 1, **caractérisé en ce qu'**une empreinte cryptographique contextuelle (*EC*), de l'ensemble d'empreintes cryptographiques, est matérialisée par une chaine d'identification *ChIEC* de l'empreinte cryptographique *EC* qui est obtenue à partir d'un ensemble *D* de données constitutrices *(d0,...,dn)* de la manière suivante :

$$ChIEC = F (G (d0,...,dn))$$

dans laquelle :

   - *G* est une fonction de mélange de données ;
   - *F* est une fonction cryptographique de calcul de la chaine d'identification.

3. Procédé de traitement d'une transaction selon la revendication 1, **caractérisé en ce que** l'étape d'obtention de l'empreinte cryptographique contextuelle comprend :

    - une étape de réception d'une adresse de localisation de l'empreinte cryptographique contextuelle au sein de la chaine de blocs ;
    - une étape d'obtention de l'empreinte cryptographique contextuelle à l'adresse précédemment reçue.

4. Procédé de traitement d'une transaction selon la revendication 1, **caractérisé en ce que** l'étape de vérification (T30, I30) de validité de l'empreinte cryptographique contextuelle comprend une étape de vérification de la validité du bloc de la chaine de blocs au sein de laquelle l'empreinte cryptographique contextuelle est insérée.

5. Procédé de traitement d'une transaction selon la revendication 1, **caractérisé en ce que** l'étape de vérification (T30, I30) de validité de l'empreinte cryptographique contextuelle comprend :

    - une étape d'obtention de données de transaction, en provenance du terminal de communication ;
    - une étape de calcul, à partir de ces données de transaction, d'une empreinte cryptographique de vérification ;
    - une étape de comparaison de empreinte cryptographique de vérification avec l'empreinte cryptographique contextuelle ; et
    - une étape de validation de l'empreinte cryptographique contextuelle lorsque la comparaison est positive.

6. Procédé de traitement d'une transaction selon la revendication 1, **caractérisé en ce que** l'étape de vérification (T30, I30) de validité de l'empreinte cryptographique contextuelle comprend une étape de comparaison d'au moins une donnée de constitution de l'empreinte cryptographique contextuelle avec au moins une donnée correspondante fournie par le terminal de communication.

7. Procédé de traitement d'une transaction selon la revendication 1, **caractérisé en ce qu'**il comprend en outre une phase préliminaire d'authentification, au cours de laquelle l'empreinte cryptographique contextuelle est créée, ladite phase préliminaire d'authentification comprenant :

    - une étape d'authentification E10 de l'utilisateur ;
    - une étape d'obtention E20 d'un message d'authentification, comprenant la confirmation d'authentification de l'utilisateur et un ensemble D de données constitutrices **(d0,...,dn)** ;
    - une étape de calcul E50 de l'empreinte cryptographique contextuelle à l'aide des données reçues ;

8. Procédé de traitement d'une transaction selon la revendication 7, **caractérisé en ce que** la phase préliminaire d'authentification comprend en outre :

    - une étape d'insertion E60 de l'empreinte cryptographique contextuelle au sein de la chaine de blocs ; et
    - lorsque le bloc de la chaine de bloc au sein duquel l'empreinte cryptographique contextuelle a été insérée est validé, une étape de transmission E70 de l'empreinte cryptographique contextuelle au terminal de communication.

9. Dispositif électronique de traitement de transactions, accessible par l'intermédiaire d'un réseau de communication, ledit dispositif comprenant des moyens de traitement comprenant de transaction et **caractérisé en ce qu'**il comprend :

    - des moyens d'obtention d'une empreinte cryptographique contextuelle, préalablement générée au cours d'une authentification d'un utilisateur sur un terminal de communication ;
    - des moyens de vérification de validité de l'empreinte cryptographique contextuelle au sein d'une chaine de blocs comprenant un ensemble d'empreintes cryptographiques, ladite vérification de validité de l'empreinte cryptographique contextuelle comprenant une détermination que l'empreinte cryptographique contextuelle est la dernière empreinte cryptographique contextuelle en date pour ledit utilisateur et/ou ledit terminal de communication au sein de la chaine de blocs ;
    - des moyens de validation d'une transaction mis en œuvre lorsque les moyens de vérification (T30, I30) de validité de l'empreinte cryptographique contextuelle au sein de la chaine de blocs fournissent une information positive.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon la revendication 1, lorsqu'il est exécuté sur un ordinateur.

**Patentansprüche**

1. Verfahren zur Verarbeitung einer Transaktion, wobei das Verfahren durch eine elektronische Vorrichtung zur Verarbeitung von Transaktionen ausgeführt wird, die über ein Kommunikationsnetz zugänglich ist, wobei das Verfahren eine Phase der Verarbeitung der Transaktion umfasst, **dadurch gekennzeichnet, dass** es Folgendes umfasst

   - einen Schritt (T10, T20, I10, I20, I21) des Erhalts eines kontextbezogenen kryptographischen Fingerabdrucks, der zuvor während einer Authentifizierung eines Benutzers an einem Kommunikationsendgerät erzeugt wurde
   - einen Schritt (T30, I30) des Verifizierens der Gültigkeit des kontextbezogenen kryptographischen Fingerabdrucks in einer Blockchain, die einen Satz kryptographischer Fingerabdrücke umfasst, wobei der Schritt (T30, I30) des Verifizierens der Gültigkeit des kontextbezogenen kryptographischen Fingerabdrucks einen Schritt des Bestimmens umfasst, dass der kontextbezogene kryptographische Fingerabdruck der neueste kontextbezogene kryptographische Fingerabdruck für den Benutzer und/oder das Kommunikationsendgerät in der Blockchain ist;
   - einen Schritt (T40, I40) der Validierung einer Transaktion, wenn der Schritt (T30, I30) der Überprüfung der Gültigkeit des kontextbezogenen kryptografischen Fingerabdrucks in der Blockchain positiv ist.

2. Verfahren zur Verarbeitung einer Transaktion nach Anspruch 1, **dadurch gekennzeichnet, dass** ein kontextbezogener kryptographischer Fingerabdruck (**EC**) aus einer Menge von kryptographischen Fingerabdrücken durch eine Kette **ChIEC** zur Identifizierung des kryptographischen Fingerabdrucks **EC** verkörpert wird, die auf der Grundlage einer Menge **D** von konstituierenden Daten (**d0,...,dn**) auf folgende Weise erhalten wird:

$$ChIEC = F(G(d0,...,dn))$$

   wobei:

   - **G** ist eine Datenvermischungsfunktion;
   - **F** ist eine kryptographische Funktion zur Berechnung der Identifikationskette.

3. Verfahren zur Verarbeitung einer Transaktion nach Anspruch 1, **dadurch gekennzeichnet, dass** der Schritt der Gewinnung des kontextbezogenen kryptographischen Fingerabdrucks umfasst:

   - einen Schritt des Empfangens einer Adresse des Speicherorts des kontextbezogenen kryptografischen Fingerabdrucks in der Blockchain;
   - einen Schritt zur Gewinnung des kontextbezogenen kryptografischen Fingerabdrucks an der zuvor empfangenen Adresse.

4. Verfahren zur Verarbeitung einer Transaktion nach Anspruch 1, **dadurch gekennzeichnet, dass** der Schritt (T30, I30) der Überprüfung der Gültigkeit des kontextbezogenen kryptografischen Fingerabdrucks einen Schritt der Überprüfung der Gültigkeit des Blocks der Blockchain umfasst, in den der kontextbezogene kryptografische Fingerabdruck eingefügt ist.

5. Verfahren zur Verarbeitung einer Transaktion nach Anspruch 1, **dadurch gekennzeichnet, dass** der Schritt (T30, I30) der Überprüfung der Gültigkeit des kontextuellen kryptographischen Fingerabdrucks umfasst:

   - einen Schritt des Erhalts von Transaktionsdaten, die vom Kommunikationsterminal stammen;
   - einen Schritt, bei dem auf der Grundlage dieser Transaktionsdaten eine kryptografische Verifizierung berechnet wird Fingerabdruck
   - einen Schritt des Vergleichs des kryptografischen Verifikations-Fingerabdrucks mit dem kryptografischen Kontext-Fingerabdruck; und
   - einen Schritt zur Validierung des kontextbezogenen kryptografischen Fingerabdrucks, wenn der Vergleich positiv ausfällt.

6. Verfahren zur Verarbeitung einer Transaktion nach Anspruch 1, **dadurch gekennzeichnet, dass** der Schritt (T30, I30) der Überprüfung der Gültigkeit des kontextbezogenen kryptographischen Fingerabdrucks einen Schritt des Vergleichs mindestens eines Datenelements zur Bildung des kontextbezogenen kryptographischen Fingerabdrucks mit mindestens einem entsprechenden Datenelement umfasst, das vom Kommunikationsendgerät bereitgestellt wird.

7. Verfahren zur Verarbeitung einer Transaktion nach Anspruch 1, **dadurch gekennzeichnet, dass** es außerdem eine vorläufige Authentifizierungsphase umfasst, während der der kontextbezogene kryptografische Fingerabdruck erstellt wird, wobei die vorläufige Authentifizierungsphase umfasst:

   - einen Schritt E10 zur Authentifizierung des Benutzers;
   - einen Schritt E20 des Erhalts einer Authentifizierungsnachricht, die die Bestätigung der Authentifizierung des Benutzers und einen Satz D von konstituierenden Daten *(d0,...,dn)* umfasst;
- einen Schritt E50 zur Berechnung des kontextbezogenen kryptografischen Fingerabdrucks unter Verwendung der empfangenen Daten

8. Verfahren zur Verarbeitung einer Transaktion nach Anspruch 7, **dadurch gekennzeichnet, dass** die vorläufige Authentifizierungsphase ferner umfasst

- einen Schritt E60 des Einfügens des kontextbezogenen kryptografischen Fingerabdrucks in die Blockchain; und
- wenn der Block der Blockchain, in den der kontextbezogene kryptografische Fingerabdruck eingefügt wurde, validiert ist, einen Schritt E70 der Übertragung des kontextbezogenen kryptografischen Fingerabdrucks an das Kommunikationsendgerät.

9. Elektronische Vorrichtung zur Verarbeitung von Transaktionen, die über ein Kommunikationsnetz zugänglich ist, wobei die Vorrichtung Mittel zur Verarbeitung einer Transaktion umfasst und **dadurch gekennzeichnet ist, dass** sie umfasst

- Mittel zum Erhalt eines kontextbezogenen kryptografischen Fingerabdrucks, der zuvor während einer Authentifizierung eines Benutzers an einem Kommunikationsendgerät erzeugt wurde;
- Mittel zum Überprüfen der Gültigkeit des kontextbezogenen kryptographischen Fingerabdrucks in einer Blockchain, die einen Satz kryptographischer Fingerabdrücke umfasst; wobei das Überprüfen der Gültigkeit des kontextbezogenen kryptographischen Fingerabdrucks das Bestimmen umfasst, dass der kontextbezogene kryptographische Fingerabdruck der neueste kontextbezogene kryptographische Fingerabdruck für den Benutzer und/oder das Kommunikationsendgerät in der Blockchain ist;
- Mittel zur Validierung einer Transaktion, die implementiert werden, wenn die Mittel (T30, I30) zur Überprüfung der Gültigkeit des kontextbezogenen kryptografischen Fingerabdrucks in der Blockchain eine positive Information liefern.

10. Computerprogrammprodukt, das von einem Kommunikationsnetz heruntergeladen werden kann und/oder auf einem Träger gespeichert ist, der von einem Computer gelesen und/oder von einem Mikroprozessor ausgeführt werden kann, **dadurch gekennzeichnet, dass** es Programmcodeanweisungen für die Ausführung eines Verfahrens nach Anspruch 1 umfasst, wenn es auf einem Computer ausgeführt wird

**Claims**

1. Method for processing a transaction, the method being implemented by an electronic device for processing transactions, accessible via a communication network, said method comprising a transaction processing phase **characterised in that** it comprises:

- a step (T10, T20, I10, I20, I21) of obtaining a contextual cryptographic fingerprint, previously generated during an authentication of a user on a communication terminal;
- a step (T30, I30) of verifying the validity of the contextual cryptographic fingerprint in a blockchain comprising a set of cryptographic fingerprints, said step (T30, I30) of verifying the validity of the contextual cryptographic fingerprint comprising a step of determining that the contextual cryptographic fingerprint is the latest contextual cryptographic fingerprint for said user and/or said communication terminal, in the blockchain;
- a step (T40, I40) of validating a transaction when the step (T30, I30) of verifying the validity of the contextual cryptographic fingerprint in the blockchain is positive.

2. Method for processing a transaction according to claim 1, **characterised in that** a contextual cryptographic fingerprint (*EC*), of set of cryptographic fingerprints, is embodied by a chain *ChIEC* for identification of the cryptographic fingerprint **EC** which is obtained on the basis of a set *D* of constituent data *(d0,...,dn)* in the following manner:

$$ChIEC = F\ (G\ (d0,\ldots,dn))$$

wherein:

- **G** is a data-mixing function;
- **F** is a cryptographic function for calculating the identification chain.

3. Method for processing a transaction according to claim 1, **characterised in that** the step of obtaining the contextual cryptographic fingerprint comprises:

- a step of receiving an address of location of the contextual cryptographic fingerprint in the blockchain;
- a step of obtaining the contextual cryptographic fingerprint at the address previously received.

4. Method for processing a transaction according to claim 1, **characterised in that** the step (T30, I30) of verifying the validity of the contextual cryptographic fingerprint comprises a step of verifying the validity of the block of the blockchain into which the contextual cryptographic fingerprint is inserted.

5. Method for processing a transaction according to claim 1, **characterised in that** the step (T30, I30) of verifying the validity of the contextual cryptographic fingerprint comprises:

    - a step of obtaining transaction data, coming from the communication terminal;
    - a step of calculating, on the basis of this transaction data, a verification cryptographic fingerprint;
    - a step of comparing the verification cryptographic fingerprint to the contextual cryptographic fingerprint; and
    - a step of validating the contextual cryptographic fingerprint when the comparison is positive.

6. Method for processing a transaction according to claim 1, **characterised in that** the step (T30, I30) of verifying the validity of the contextual cryptographic fingerprint comprises a step of comparing at least one piece of data for constituting the contextual cryptographic fingerprint to at least one corresponding piece of data provided by the communication terminal.

7. Method for processing a transaction according to claim 1, **characterised in that** it further comprises a preliminary authentication phase, during which the contextual cryptographic fingerprint is created, said preliminary authentication phase comprising:

    - a step E10 of authenticating the user;
    - a step E20 of obtaining an authentication message, comprising the confirmation of the authentication of the user and a set *D* of constituent *data (d0,...,dn)*;
    - a step E50 of calculating the contextual cryptographic fingerprint using the data received.

8. Method for processing a transaction according to claim 7, **characterised in that** the preliminary authentication phase further comprises:

    - a step E60 of inserting the contextual cryptographic fingerprint into the blockchain; and
    - when the block of the blockchain into which the contextual cryptographic fingerprint has been inserted is validated, a step E70 of transmitting the contextual cryptographic fingerprint to the communication terminal.

9. Electronic device for processing transactions, accessible via a communication network, said device comprising means for processing a transaction and **characterised in that** it comprises:

    - means for obtaining a contextual cryptographic fingerprint, previously generated during an authentication of a user on a communication terminal;
    - means for verifying the validity of the contextual cryptographic fingerprint in a blockchain comprising a set of cryptographic fingerprints; verifying the validity of the contextual cryptographic fingerprint comprising determining that the contextual cryptographic fingerprint is the latest contextual cryptographic fingerprint for said user and/or said communication terminal, in the blockchain;
    - means for validating a transaction implemented when the means (T30, I30) for verifying the validity of the contextual cryptographic fingerprint in the blockchain provide a positive piece of information.

10. Computer program product downloadable from a communication network and/or stored on a support readable by computer and/or executable by a microprocessor, **characterised in that** it comprises program code instructions for the execution of a method according to claim 1, when it is executed on a computer.

TComs

MerchtSrvs

Ntwk

Ecc

Auth

BlcCh

AuthSrv

Ecc

Figure 1

Figure 2

Figure 3

Figure 4

Figure 5

**EP 3 857 413 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* WO 2012053780 A